# EUROPÄISCHE PATENTSCHRIFT

(11) **EP 1 266 270 B1**
(45) Veröffentlichungstag und Bekanntmachung des Hinweises auf die Patenterteilung: **21.06.2006**
(21) Anmeldenummer: 00920522.0
(22) Anmeldetag: 21.03.2000
(51) Int. Cl.: G05B 19/418

(54) **SYSTEM UND VERFAHREN ZUR ERMITTLUNG DER OPTIMALEN BETRIEBSGESCHWINDIGKEIT EINER PRODUKTIONSMASCHINE**
SYSTEM AND METHOD FOR DETERMINING THE OPTIMAL OPERATING SPEED OF A PRODUCTION MACHINE
SYSTEME ET PROCEDE POUR DETERMINER LA VITESSE DE FONCTIONNEMENT OPTIMALE D'UNE MACHINE DE PRODUCTION

(43) Veröffentlichungstag der Anmeldung: 18.12.2002
(73) Patentinhaber: ABB RESEARCH LTD., 8050 Zürich (CH)
(72) Erfinder: SZÖKE, Szaniszlo, B-5340 Gesves (BE); VOLLMAR, Gerhard, D-67149 Meckenheim (DE)
(74) Vertreter: Miller, Toivo
(86) Internationale Anmeldenummer: PCT/EP2000/002470
(87) Internationale Veröffentlichungsnummer: WO 2001/071440

(56) Entgegenhaltungen:
- WO-A-96/28773
- DE-A- 4 110 108
- DE-A- 19 740 307
- US-A- 5 280 425
- US-A- 5 305 221
- US-A- 5 402 367
- US-A- 5 721 686
- PATENT ABSTRACTS OF JAPAN vol. 1998, no. 03, 27. Februar 1998 (1998-02-27) & JP 09 305204 A (NISSAN MOTOR CO LTD), 28. November 1997 (1997-11-28)
- PATENT ABSTRACTS OF JAPAN vol. 1996, no. 02, 29. Februar 1996 (1996-02-29) & JP 07 282144 A (NIPPON TELEGR & TELEPH CORP), 27. Oktober 1995 (1995-10-27)
- MULLER D J ET AL: "A SIMULATION-BASED WORK ORDER RELEASE MECHANISM FOR A FLEXIBLE MANUFACTURING SYSTEM" , PROCEEDINGS OF THE WINTER SIMULATION CONFERENCE,US,NEW YORK, IEEE, VOL. CONF. 22, PAGE(S) 599-602 XP000279720 Abbildung 3

## Beschreibung

Die Erfindung bezieht sich auf ein Verfahren zur Ermittlung der optimalen Betriebsgeschwindigkeit einer Produktionsmaschine, die in einem bestimmten Geschwindigkeitsbereich arbeiten kann, sowie auf ein System zur Durchführung eines solchen Verfahrens.

In vielen Industriezweigen sind Maschinen eingesetzt, die mit mehr als einer Geschwindigkeit arbeiten können. Beispiele hierzu sind eine Verpackungsmaschine, die z. B. 30 bis 50 Pakete pro Minute füllen kann, ein Extruder, der eine Masse von 1200 bis 1500 kg pro Stunde verarbeiten kann, oder ein Drucker, der pro Minute 200 bis 400 Meter Papierband bewegen und bedrucken kann.

Die jeweils für den Maschinenbetrieb vorzugebende Sollgeschwindigkeit wird in der Regel vom Maschinenbediener einer Betriebsanleitung des Maschinenherstellers entnommen.

Die so ermittelte Sollgeschwindigkeit muß jedoch keineswegs die optimale Geschwindigkeit sein; weder im Hinblick auf Produktionsmengen pro Zeiteinheit, noch bezüglich Produktionskosten. Dies erklärt sich daraus, daß Maschinenhersteller oftmals aus Wettbewerbsgründen eine zu hohe Maschinengeschwindigkeit angeben. Außerdem kann der Maschinenhersteller besondere fertigungsbedingte Umstände, bei seiner Geschwindigkeitsangabe nicht berücksichtigen. Beispielsweise kann eine Maschine möglicherweise problemlos 50 Päckchen pro Minute mit trockenem feinkörnigem Kaffee füllen, aber beim Füllen von mehr als 30 Päckchen pro Minute mit feuchtem feingemahlenem Kaffee einen häufigen Stillstand verursachen.

Der US-A-5 280 425 ist eine Vorrichtung und ein entsprechendes Verfahren zu entnehmen zur Produktionsplanung in einer Produktionsanlage mit Mitteln zum Erzeugen theoretischer Pläne und einem auf Zwangsbedingungen basierenden Modell, sowie Berechnungsmitteln, um damit einen durchführbaren Produktionsplan aufzufinden, der den Zwangsbedingungen genügt. Die Zwangsbedingungen beziehen sich z. B. auf die Produktionskapazität und die Maschinenverfügbarkeit und es werden z. B. Plankostenfunktionen und Fehlmengenkosten berechnet. Die Ermittlung einer Betriebsgeschwindigkeit ist allerdings nicht erwähnt.

DE-A-197 40 307 beschreibt ein Steuerungssystem für eine Webmaschine, deren Steuereinrichtung mit einer Zentraleinheit verbunden ist, die einen Rechner und einen Datenspeicher enthält. Mit der Zentraleinheit wird ein Arbeitsgeschwindigkeits-Sollwert ermittelt, wobei Garndaten und Musterdaten berücksichtigt werden, um eine maximal mögliche Arbeitsgeschwindigkeit der Webmaschine entsprechend der Reißfestigkeit des jeweils benutzten Garns zu reduzieren. Die Musterdaten beziehen sich auf Garne und Webbreiten. Um notwendige Geschwindigkeitsreduzierungen im Hinblick auf bestimmte Webbreiten und Garneigenschaften zu berücksichtigen, wird eine maschinenspezifische Maximalgeschwindigkeit durch einfache Verhältnisrechnung umgerechnet und es werden die Rechenergebnisse in garnspezifischen Tabellen abgespeichert. Eine Steuerungsfunktion sieht vor, dass bei der Herstellung eines Gewebes immer dann auf eine höhere Arbeitsgeschwindigkeit umgeschaltet wird, wenn laut Muster mehrere, z. B. mehr als 20 Schussfäden eines Garns aufeinander folgen, das eine höhere Reißfestigkeit hat. Es erfolgt allerdings keine automatisierte Optimierung der Arbeitsgeschwindigkeit unter Berücksichtigung tatsächlicher Produktionsgegebenheiten bzw. Produktionskosten im Sinne einer Regelung, sondern lediglich eine geplante oder gesteuerte Vorgabe der Arbeitsgeschwindigkeit.

Ausgehend von der DE-A-197 40 307 liegt der Erfindung daher die Aufgabe zugrunde, ein System und ein Verfahren zur automatisierten Optimierung der Sollgeschwindigkeit einer Produktionsmaschine anzugeben.

Diese Aufgabe wird durch ein System bzw. ein Verfahren zur Ermittlung der optimalen Betriebsgeschwindigkeit einer Produktionsmaschine gelöst, das die im Anspruch 1 bzw. 5 angegebenen Merkmale aufweist.

Eine Beschreibung der Erfindung erfolgt nachstehend anhand eines in Zeichnungsfiguren dargestellten Ausführungsbeispiels.

Es zeigen:
- Fig. 1: das Blockschema eines Systems zum automatischen Optimieren,
- Fig. 2: Verfahrensschritte,
- Fig. 3: Fehlerereignisdaten,
- Fig. 4: produktbezogene Daten,
- Fig. 5: ein Bewertungsmodell, und
- Fig. 6: Verläufe von Produktionsmengen und Produktionsstückkosten.

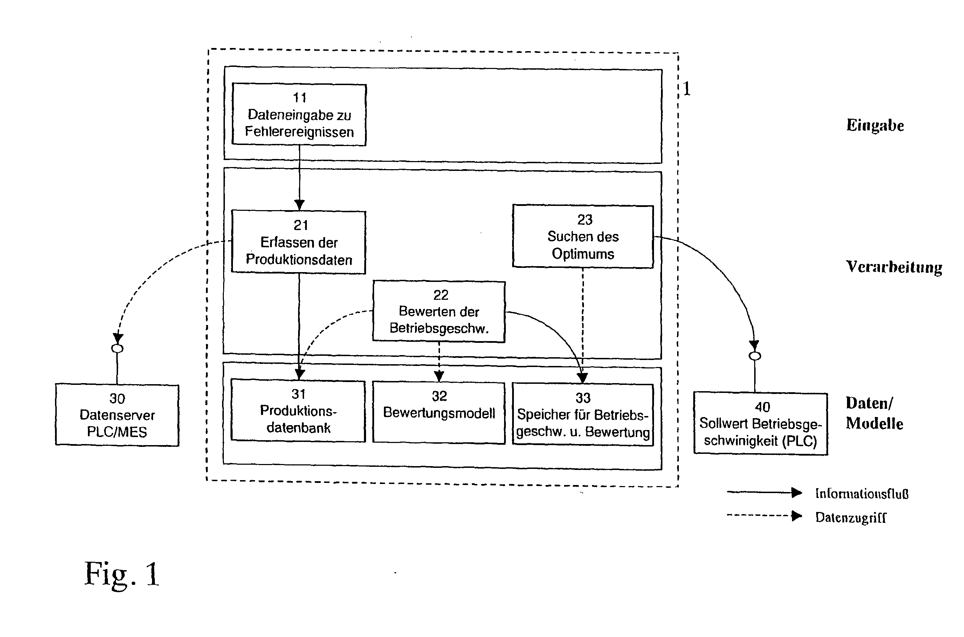

Fig. 1 zeigt das Blockschema eines Systems zum automatischen Optimieren der Betriebsgeschwindigkeit einer Produktionsmaschine. Das Blockschema zeigt Komponenten einer Datenverarbeitungseinrichtung 1, die Hardware- und Software-Komponenten zur Dateneingabe, Verarbeitung und Speicherung enthält. Mittels einer Produktionsdaten-Erfassungseinrichtung 21 sind Produktionsdaten aus einer Datenerfassungseinrichtung 30 abrufbar und mit Zusatzinformationen verknüpfbar. Die Datenerfassungseinrichtung 30 kann ein Datenserver in einer Speicherprogrammierbaren Steuerung (PLC) oder einem Manufacturing Executing System (MES) sein. Automatisch erfaßte Produktionsdaten sind beispielsweise Maschinenstatus (z. B. läuft, abgeschaltet, wartet). Produktionsmengen oder Materialverbrauch. Zusatzinformationen sind beispielsweise Produktbezeichnung oder Informationen zum Grund einer Maschinenabschaltung, die über eine Dateneingabe 11 eingebbar sind. Die Datenerfassungseinrichtung 30 veranlaßt eine Speicherung damit gebildeter Produktionsdaten in einer Produktionsdatenbank 31.

Die Datenverarbeitungseinrichtung 1 enthält eine Bewertungsfunktion 22, die dafür eingerichtet ist, Produktionsdaten aus der Produktionsdatenbank 31, sowie ein gespeichertes Bewertungsmodell 32 abzurufen, auf dieser Basis eine Betriebsgeschwindigkeit zu ermitteln und in einem Datenspeicher 33 abzulegen.

Außerdem enthält die Datenverarbeitungseinrichtung 1 eine Optimierungsfunktion 23, die Zugriff auf Daten des Datenspeichers 33 hat, und durch Verknüpfung mit Produktionskosten einen optimalen Betriebsgeschwindigkeits-Sollwert ermittelt, den sie einem Sollwertspeicher 40 zuführt.

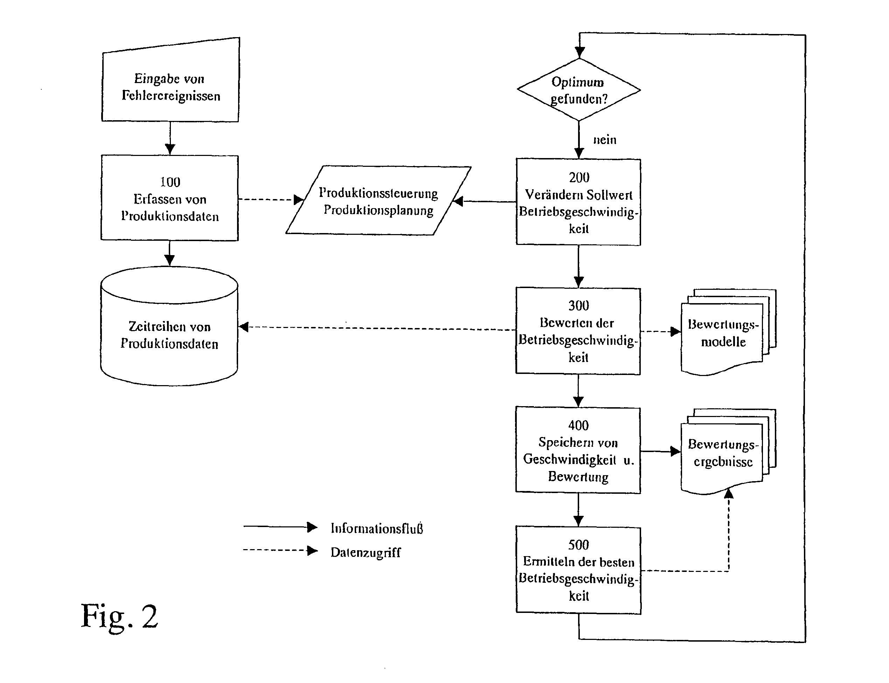

Die Arbeitsweise des Systems wird nachstehend weiter anhand der in Fig. 2 dargestellten Verfahrensschritte erläutert.

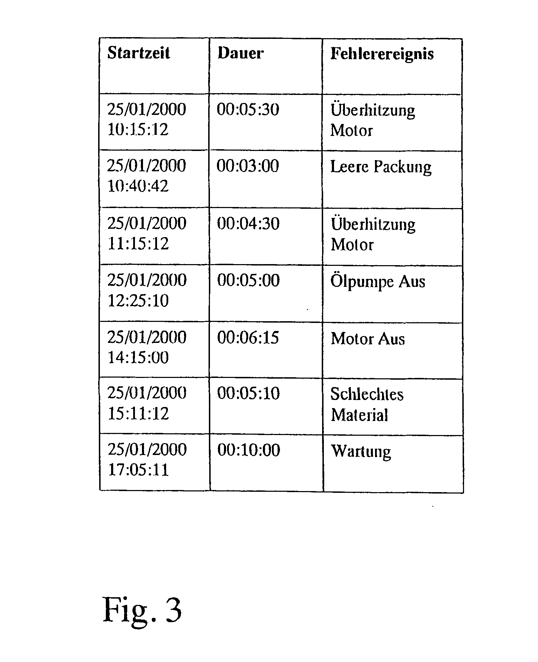

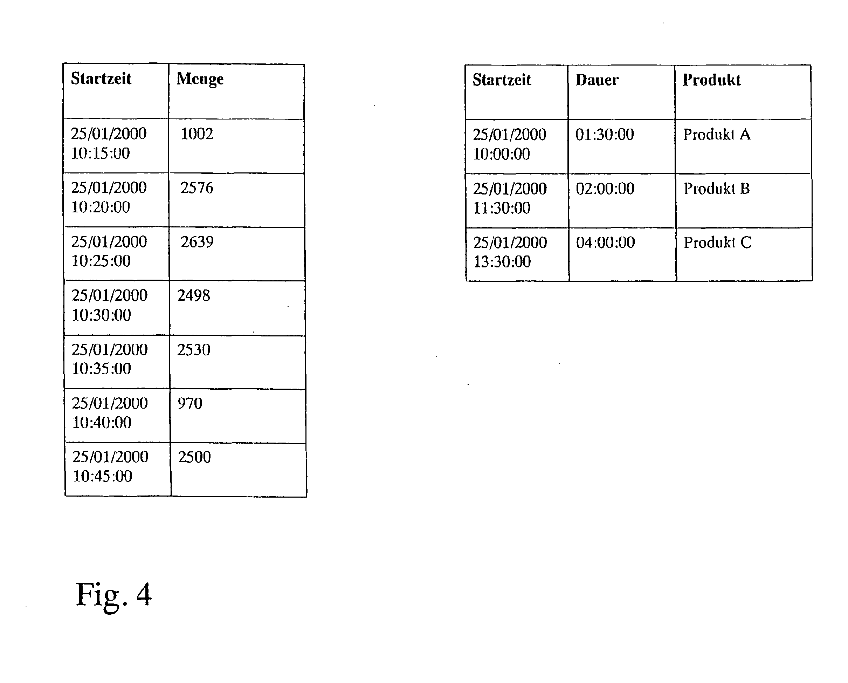

Fig. 2 zeigt einen Schritt 100, in dem mittels der Produktionsdaten-Erfassungseinrichtung 21 die für die Optimierung benötigten Informationen erfaßt und in der Produktionsdatenbank 31 als Zeitreihen abgelegt werden. Zu den erfaßten Daten gehören:
- Stillstandszeiten infolge von Fehlerereignissen; Fig. 3 zeigt beispielhaft solche Fehlerereignisdaten,
- die je Produktart produzierten Mengen, und
- die Produktionszeitdauer für jede Produktart (siehe hierzu auch Fig. 4).

Im Schritt 200 wird ein Sollwert der Betriebsgeschwindigkeit über eine Schnittstelle, dem Sollwertspeicher 40 der Produktionssteuerung vorgegeben. Nachfolgend werden Optimierungsschritte ausgeführt.

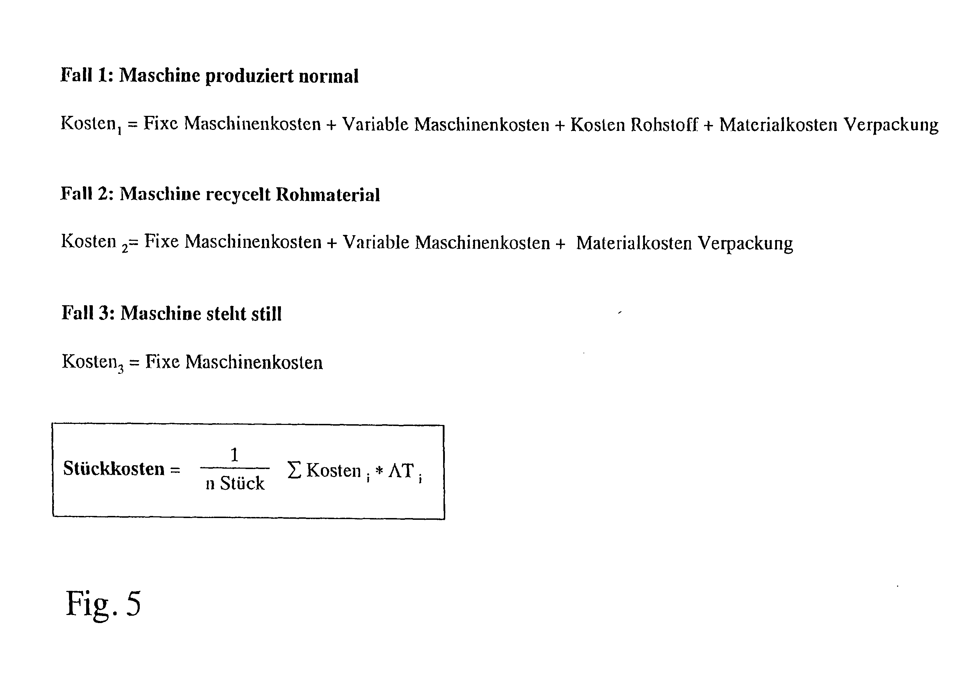

Im Schritt 300 wird die aktuell eingestellte Betriebsgeschwindigkeit mittels der Bewertungsfunktion 22 bewertet. Dazu wird auf die in der Produktionsdatenbank 31 abgelegten Produktionsdaten zugegriffen. Typischerweise wird solch eine Auswertung für einen Tag oder eine Woche durchgeführt. Die Betriebsgeschwindigkeit wird unter Einsatz des Bewertungsmodells 32 bewertet, das beispielhaft in Fig. 5 dargestellt ist.

Im Schritt 400 wird die jeweilige ermittelte Geschwindigkeit zusammen mit dem Ergebnis der Bewertung in einem Datenspeicher 33 abgelegt. Da die optimale Maschinengeschwindigkeit auch von der Art des Produktes abhängig sein kann, werden Geschwindigkeit und Bewertung produktbezogen gespeichert.

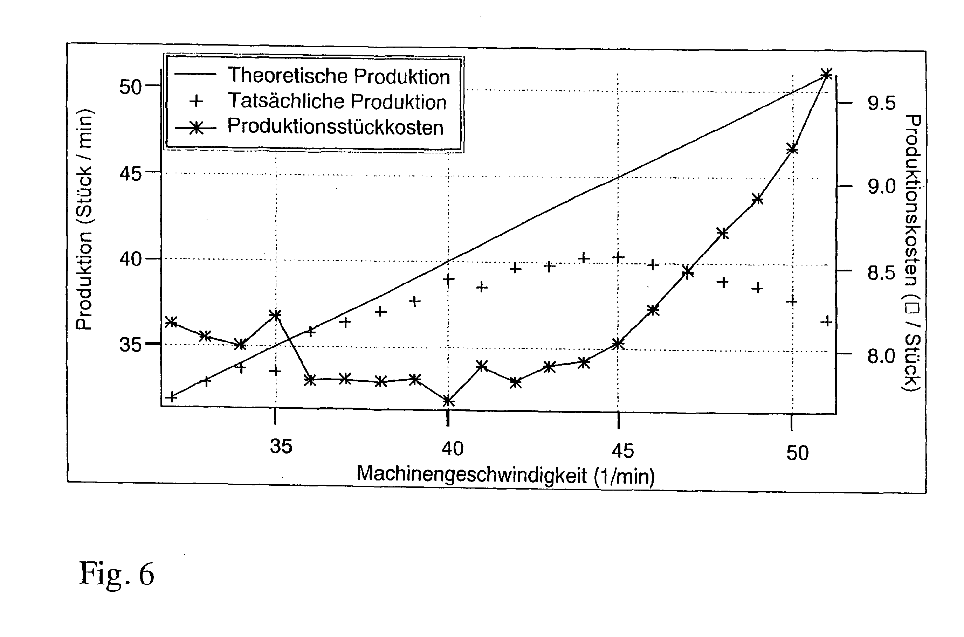

In Schritt 500 wird durch eine Optimierungsfunktion 23 das Optimum der Betriebsgeschwindigkeit in Abhängigkeit von ermittelten oder vorgegebenen Produktionsstückkosten ermittelt. Fig. 6 zeigt beispielhaft zur Optimierung benutzte Verläufe auf. Im Beispiel liegt das Optimum bei einer Betriebsgeschwindigkeit von 40 1/min. Ist das Optimum noch nicht gefunden, wird die Geschwindigkeit in einer vorgegebenen Schrittweite verändert und ein wiederholter Schritt 200 gibt den neuen Sollwert der Maschinensteuerung vor. Die Optimierung kann mit einem Scatter Plot Smoothing Algorithmus vorgenommen werden, der z. B. beschrieben ist in Venables, Ripley: Modern Applied Statistics with S-Plus, Springer, 3^{rd} ed. 1999.

Fig. 3 zeigt beispielhaft Fehlerereignisdaten, wobei jeweils Startzeit, Dauer und Fehlerereignis aufgelistet sind. Die Fehlereignisdaten können entweder durch die Produktionsdatenerfassung 21 automatisch hergeleitet werden oder der Maschinenbediener gibt die Daten über die Dateneingabe 11 ein. Die Fehlereignisdaten werden zur Beurteilung des aktuellen Produktionszustands benötigt, beispielsweise normale Produktion, Rohstoff wird recycelt oder Stillstand.

Fig. 4 zeigt die Form, in der die produktbezogenen Daten erfaßt werden. In definierten Zeitschritten wird die produzierte Menge erfaßt, beispielsweise alle fünf Minuten. Zusätzlich wird die Zeit und die Dauer festgehalten, in der ein bestimmtes Produkt produziert wurde. Damit kann eine produktbezogene Optimierung der Maschinengeschwindigkeit vorgenommen werden

Fig. 5 zeigt beispielhaft ein Bewertungsmodell. Die Bewertung wird anhand der Produktstückkosten vorgenommen. Im Beispiel werden drei Fälle unterschieden: normale Produktion, der Produktrohstoff wird recycelt und die Maschine steht still. Die Kosten können sich zusammensetzen aus:
- Fixen Kosten, beispielsweise Maschinenabschreibung
- Variable Kosten, beispielsweise Kosten für Antriebsenergie oder Kosten für den Maschinenbediener
- Kosten für das Rohmaterial
- Kosten für das Verpackungsmaterial
Die Produktstückkosten ergeben sich aus der Summe der Einzelkosten dividiert durch die Anzahl der produzierten Menge.

Fig. 6 zeigt die theoretische und tatsächliche Abhängigkeit der Produktionskapazität einer Maschine von der Geschwindigkeit. Eine tatsächliche abnehmende Produktionsmenge bei zunehmender Geschwindigkeit ergibt sich durch die zunehmende Störungsanfälligkeit. Fig. 6 zeigt zudem ein Beispiel für den Verlauf der Bewertungsfunktion aus Fig. 5. Deutlich ist zu erkennen, daß die Produktionsstückkosten bei einer optimalen Geschwindigkeit minimal sind.

## Patentansprüche

1. System zur Ermittlung der optimalen Betriebsgeschwindigkeit einer Produktionsmaschine, die dafür eingerichtet ist, in einem bestimmten Geschwindigkeitsbereich zu arbeiten, wobei der Maschinensteuerung der Produktionsmaschine Betriebsgeschwindigkeits-Sollwerte aus einem Sollwertspeicher (40) zugeführt sind, und der Produktionsmaschine zur Ermittlung und Bereitstellung der Sollwerte eine Datenverarbeitungseinrichtung (1) zugeordnet ist, die eine Produktionsdatenbank (31) und den Sollwertspeicher (40) enthält, **dadurch gekennzeichnet, dass**
a) der Produktionsmaschine außerdem eine Datenerfassungseinrichtung (30) zur Speicherung und Bereitstellung automatisch erfasster Produktionsdaten zugeordnet ist,
b) die Datenverarbeitungseinrichtung (1) eine Dateneingabe (11) zur Eingabe von Zusatzinformationen enthält,
c) die Datenverarbeitungseinrichtung (1) eine Produktionsdaten-Erfassungseinrichtung (21) enthält, mit der automatisch erfasste Produktionsdaten aus der Datenerfassungseinrichtung (30) abrufbar und mit eingegeben Zusatzinformationen verknüpfbar sind, und die dafür eingerichtet ist, eine Speicherung durch Verknüpfung der automatisch erfassten Produktionsdaten mit den Zusatzinformationen gebildeter Produktionsdaten in der Produktionsdatenbank (31) zu bewirken,
d) die Datenverarbeitungseinrichtung (1) eine Bewertungsfunktion (22) enthält, die dafür eingerichtet ist, Produktionsdaten aus der Produktionsdatenbank (31), sowie ein in der Datenverarbeitungseinrichtung (1) gespeichertes Bewertungsmodell (32) abzurufen, auf dieser Basis eine Betriebsgeschwindigkeit zu ermitteln und in einem Datenspeicher (33) abzulegen, und
e) das System auch zur automatischen Optimierung der Betriebsgeschwindigkeit eingerichtet ist, wofür die Datenverarbeitungseinrichtung (1) außerdem eine Optimierungsfunktion (23) enthält, die Zugriff auf Daten des Datenspeichers (33) hat, und die Optimierungsfunktion (23) dafür eingerichtet ist, durch Verknüpfung mit gespeicherten Produktionsstückkosten einen optimalen Betriebsgeschwindigkeits-Sollwert zu ermitteln und dem Sollwertspeicher (40) zuzuführen.

2. System nach Anspruch 1, **dadurch gekennzeichnet, dass** die automatisch erfassten Produktionsdaten Daten zu Zeitpunkt und Dauer von Maschinenstillständen aufgrund von Fehlerereignissen, und/oder Produktionstückzahlen pro Zeiteinheit enthalten.

3. System nach einem der vorstehenden Ansprüche, **dadurch gekennzeichnet, dass** die Zusatzinformationen Informationen zum Grund einer Maschinenabschaltung und/oder eine Produktbezeichnung enthalten.

4. System nach einem der vorstehenden Ansprüche, **dadurch gekennzeichnet, dass** die in der Datenverarbeitungseinrichtung (1) gespeicherten Produktionsstückkosten zuvor mittels der Dateneingabe (11) eingegeben oder in der Datenverarbeitungseinrichtung (1) ermittelt sind.

5. Verfahren zur Ermittlung der optimalen Betriebsgeschwindigkeit einer Produktionsmaschine, die in einem bestimmten Geschwindigkeitsbereich arbeiten kann, wobei deren Maschinensteuerung Betriebsgeschwindigkeits-Sollwerte zugeführt werden, die in einer Datenverarbeitungseinrichtung (1) unter Verwendung von Produktionsdaten gebildet werden, **dadurch gekennzeichnet, dass**
a) in der Datenverarbeitungseinrichtung (1) automatisch erfasste Produktionsdaten mit außerdem eingegebenen Zusatzinformationen verknüpft werden zur Bildung von Produktionsdaten, die verwendet werden, um mittels eines Bewertungsmodells (32) jeweils einen Betriebsgeschwindigkeits-Sollwert zu ermitteln, der in einem Datenspeicher (33) gespeichert wird, und
b) eine Optimierungsfunktion (23) der Datenverarbeitungseinrichtung (1) auf Daten des Datenspeichers (33) zugreift und durch Verknüpfung mit gespeicherten Produktionsstückkosten einen optimalen Betriebsgeschwindigkeits-Sollwert ermittelt, der der Maschinensteuerung zugeführt wird.

6. Verfahren nach Anspruch 5, **dadurch gekennzeichnet, dass** automatisch Produktions-Daten erfasst werden, die Zeitpunkt und Dauer von Maschinenstillständen aufgrund von Fehlerereignissen, und /oder Produktionstückzahlen pro Zeiteinheit enthalten.

7. Verfahren nach Anspruch 5 oder 6, **dadurch gekennzeichnet, dass** als Zusatzinformationen Informationen zum Grund einer Maschinenabschaltung und/oder eine Produktbezeichnung eingegeben werden.

8. Verfahren nach einem der Ansprüche 5 bis 7, **dadurch gekennzeichnet, dass** die gespeicherten Produktionsstückkosten zuvor eingegeben oder in der Datenverarbeitungseinrichtung (1) ermittelt werden.

## Claims

1. System for ascertaining the optimum operating speed of a production machine which is set up to operate in a specific speed range, the machine control system of the production machine being supplied with operating speed desired values from a desired value store (40), and the production machine being assigned a data processing device (1), which contains a production database (31) and the desired value store (40), for ascertaining and providing the desired values, **characterized in that**
a) the production machine is additionally assigned a data acquisition device (30) for storing and providing automatically acquired production data,
b) the data processing device (1) contains a data input means (11) for the input of additional information,
c) the data processing device (1) contains a production-data acquisition device (21) with which automatically acquired production data can be called up from the data acquisition device (30) and linked with additional information that is input, and which is set up to effect storage in the production database (31) of production data formed by linking the automatically acquired production data with the additional information,
d) the data processing device (1) contains an assessment function (22) which is set up to call up production data from the production database (31), and also an assessment model (32) stored in the data processing device (1), to ascertain an operating speed on this basis and to store it in a data store (33), and
e) the system is also set up for the automatic optimization of the operating speed, for which the data processing device (1) additionally contains an optimization function (23), which has access to data from the data store (33), and, by linking with stored production unit costs, the optimization function (23) is set up to ascertain an optimum operating speed desired value and to feed it to the desired value store (40).

2. System according to Claim 1, **characterized in that** the automatically acquired production data contain data relating to the time and duration of machine downtimes caused by fault events, and/or production unit numbers per unit time.

3. System according to one of the preceding claims, **characterized in that** the additional information contains information relating to the reason why a machine was switched off and/or a product designation.

4. System according to one of the preceding claims, **characterized in that** the production unit costs stored in the data processing device (1) have previously been input by means of the data input means (11) or ascertained in the data processing device (1).

5. Method for ascertaining the optimum operating speed of a production machine which can operate in a specific speed range, its machine control system being fed with operating speed desired values which are formed in a data processing device (1) by using production data, **characterized in that**
a) in the data processing device (1), automatically acquired production data are linked with additional information also input in order to form production data which, by means of an assessment model (32), are used to ascertain an operating speed desired value in each case which is stored in a data store (33), and
b) an optimization function (23) of the data processing device (1) makes access to data from the data store (33) and, by linking with stored production unit costs, ascertains an optimum operating speed desired value, which is fed to the machine control system.

6. Method according to Claim 5, **characterized in that** production data which contain the time and duration of machine downtimes caused by fault events, and/or production unit numbers per unit time are acquired automatically.

7. Method according to Claim 5 or 6, **characterized in that** the additional information input is information relating to the reason why a machine was switched off and/or a product designation.

8. Method according to one of Claims 5 to 7, **characterized in that** the stored production unit costs are input previously or ascertained in the data processing device (1).

## Revendications

1. Système pour déterminer la vitesse de fonctionnement optimale d'une machine de production qui est conçue pour fonctionner à l'intérieur d'une plage de vitesses déterminée, des vitesses de fonctionnement de consigne provenant d'une mémoire de valeurs de consigne (40) étant transmises à la commande de la machine de production et un dispositif de traitement de données (1), qui comporte une banque de données de production (31) et la mémoire de valeurs de consigne (40), étant associé à la machine de production pour déterminer et mettre à disposition les valeurs de consigne, **caractérisé par** le fait
a) qu'à la machine de production est associé en outre un dispositif d'acquisition de données (30) pour mémoriser et mettre à disposition de manière automatique des données de production acquises,
b) que le dispositif de traitement de données (1) comporte un moyen d'entrée de données (11) pour la saisie d'informations complémentaires,
c) que le dispositif de traitement de données (1) comporte un dispositif d'acquisition de données de production (21) à l'aide duquel des données de production acquises de manière automatique peuvent être lues dans le dispositif d'acquisition de données (30) et combinées aux informations complémentaires saisies et qui est agencé pour assurer une mémorisation dans la banque de données de production (31) des données de production obtenues par combinaison des données de production acquises de manière automatique et des informations complémentaires,
d) que le dispositif de traitement de données (1) comporte une fonction d'exploitation (22) qui est agencée pour lire des données de production dans la banque de données de production (31) ainsi qu'un modèle d'exploitation (32) mémorisé dans le dispositif de traitement de données (1), pour déterminer une vitesse de fonctionnement sur cette base et la mémoriser dans une mémoire de données (33) et
e) que le système est également agencé pour optimiser de manière automatique la vitesse de fonctionnement, à cet effet le dispositif de traitement de données (1) comportant en outre une fonction d'optimisation (23) qui accède à des données de la mémoire de données (33) et la fonction d'optimisation (23) étant agencée pour déterminer une vitesse de fonctionnement de consigne optimale par combinaison avec des coûts de production unitaires et l'introduire dans la mémoire de valeurs de consigne (40).

2. Système selon la revendication 1, **caractérisé par le fait que** les données de production acquises de manière automatique comprennent des données concernant l'instant et la durée d'arrêts machine dus à des incidents et/ou des quantités de production par unité de temps.

3. Système selon une des revendications précédentes, **caractérisé par le fait que** les informations complémentaires comprennent des informations sur les causes d'un arrêt machine et/ou une désignation de produit.

4. Système selon une des revendications précédentes, **caractérisé par le fait que** les coûts de production unitaires mémorisés dans le dispositif de traitement de données (1) sont saisis préalablement à l'aide du moyen d'entrée de données (11) ou sont déterminés dans le dispositif de traitement de données (1).

5. Procédé pour déterminer la vitesse de fonctionnement optimale d'une machine de production pouvant fonctionner à l'intérieur d'une plage de vitesses déterminée, des vitesses de fonctionnement de consigne qui sont établies dans un dispositif de traitement de données (1), à partir de données de production, étant transmises à la commande de la machine de production, **caractérisé par** le fait
a) que dans le dispositif de traitement de données (1), des données de production acquises de manière automatique sont combinées à des informations complémentaires entrées par saisie pour former des données de production qui sont utilisées pour déterminer, à l'aide d'un modèle d'exploitation (32), une vitesse de fonctionnement de consigne qui est ensuite mémorisée dans une mémoire de données (33) et
b) qu'une fonction d'optimisation (23) du dispositif de traitement de données (1) accède à des données de la mémoire de données (33) et, par combinaison avec des coûts de production unitaires mémorisés, détermine une vitesse de fonctionnement de consigne optimale qui est transmise à la commande de machine.

6. Procédé selon la revendication 5, **caractérisé par le fait que** des données de production sont acquises de manière automatique, lesquelles données comprennent l'instant et la durée d'arrêts machine dus à des incidents et/ou des quantités de production par unité de temps.

7. Procédé selon la revendication 5 ou 6, **caractérisé par le fait que** l'on entre comme informations complémentaires des informations sur les causes d'un arrêt machine et/ou une désignation de produit.

8. Procédé selon une des revendications 5 à 7, **caractérisé par le fait que** l'on saisit au préalable les coûts de production unitaires mémorisés ou on les détermine dans le dispositif de traitement de données (1).
